# EUROPÄISCHE PATENTSCHRIFT

(11) **EP 0 909 441 B1**
(45) Veröffentlichungstag und Bekanntmachung des Hinweises auf die Patenterteilung: **05.03.2003**
(21) Anmeldenummer: 97929149.9
(22) Anmeldetag: 05.06.1997
(51) Int. Cl.: G10K 11/00

(54) **BEFESTIGUNGSHÜLSE FÜR ULTRASCHALLWANDLER MIT SELBSTSICHERNDER BEFESTIGUNG**
FASTENING CASE FOR ULTRASONIC TRANSMITTER WITH SELF-LOCKING FASTENING
BOITIER DE FIXATION POUR TRANSDUCTEUR ULTRASONIQUE, AVEC SYSTEME DE FIXATION AUTOBLOQUANT

(30) Priorität: 01.07.1996 DE 19626291
(43) Veröffentlichungstag der Anmeldung: 21.04.1999
(73) Patentinhaber: Valeo Schalter und Sensoren GmbH, 74321 Bietigheim-Bissingen (DE)
(72) Erfinder: MÜLLER, Harry, D-71711 Steinheim (DE); MATHES, Joachim, D-74080 Heilbronn (DE); Grüner, Roland, 71732 Tamm (DE)
(74) Vertreter: Dreiss, Fuhlendorf, Steimle & Becker
(86) Internationale Anmeldenummer: EP9702918
(87) Internationale Veröffentlichungsnummer: WO98000832

(56) Entgegenhaltungen:
- WO-A-97/48578
- DE-A- 3 812 182
- DE-A- 19 528 474
- FR-A- 2 632 472

## Beschreibung

Die Erfindung betrifft eine Befestigungshülse für Sensoren oder andere an der Oberfläche eines Fahrzeugs zu befestigende Einrichtungen. Derartige Befestigungshülsen werden insbesondere für Sensoren beispielsweise Ultraschallwandler benötigt, die an Stoßfängern befestigt werden sollen. Dabei ragt das offene Ende des Ultraschallwandlers durch eine entsprechende Öffnung in dem Stoßfänger durch diesen durch, so daß Ultraschallwellen oder geeignete andere Wellen in die Umgebung des Fahrzeugs abgestrahlt und von dort wieder empfangen werden können. Um zu verhindern, daß der Sensor aus der Öffnung herausfällt, wird dieser in an sich bekannter Weise durch einen Befestigungsring gesichert, welcher auf das hinter dem Stoßfänger liegende Ende des Wandlers aufgerastet wird. Da gleichzeitig noch verhindert werden soll, daß der in die Stoßfängeröffnung eingesteckte Wandler sich innerhalb der Öffnung bewegt und möglicherweise Klappergeräusche erzeugt, wird der Wandler durch eine Spiralfeder mit seinem an seinem Vorderende befindlichen Bund gegen die Außenfläche des Stoßfängers gezogen, wobei sich die Feder mit ihrem anderen Ende an dem Befestigungsring abstützt. Eine derartige Anordnung ist beispielsweise in der DE-OS 38 12 182 beschrieben. Nachteilig hierbei ist, daß einerseits der Wandler selbst mit einem Bund versehen sein muß, dessen Kontur sich an die Formgestaltung des Stoßfängers anpaßt.

Des weiteren muß die Öffnung in dem Stoßfänger an den Durchmesser des Wandlers angepaßt sein. Schließlich werden noch geeignete Spiralfedern benötigt, die in ihrem Durchmesser wieder an den Durchmesser des Wandlers angepaßt sein müssen.

In der DE-A-19528474 wurde bereits vorgeschlagen, die Lage von Befestigungsring und Wandler insoweit zu vertauschen, daß der Befestigungsring durch den Stoßfänger gesteckt und der Wandler mit dem Befestigungsring verrastet wird. Auch bei dieser Konstruktion ist wiederum eine Spiralfeder notwendig, welche den Befestigungsring mit Vorspannung gegen die Außenfläche des Stoßfänger zieht. Vorteilhaft bei dieser vorgeschlagenen Version ist allerdings, daß nicht mehr der Wandler selbst an den Stoßfänger angepaßt werden muß, sondern nur noch der Befestigungsring, der somit gleichsam als Adapter zwischen Wandler und Stoßfänger wirken kann.

Eine Befestigungshülse für Ultraschall wandler wird auch in der nicht vorveröffentlichten Patentanmeldung WO-A-97/48578 beschrieben.

Die vorliegende Erfindung geht daher aus von einer Befestigungshülse der sich aus dem Oberbegriff des Anspruchs 1 ergebenden Gattung. Aufgabe der Erfindung ist es, die Befestigungshülse insofern noch weiter zu verbessern, als die Wirkung der bekannten Spiralfeder noch in die Befestigungshülse selbst integriert wird, so daß sich die Befestigungshülse selbst in der Öffnung des Stoßfängers zu halten vermag.

Die Aufgabe wird durch die sich aus dem kennzeichnenden Teil des Anspruchs 1 ergebende Merkmalskombination gelöst. Die Erfindung besteht im Prinzip also darin, federnde Rastmittel an der Befestigungshülse vorzusehen, wobei die Federwirkung der Rastmittel gestattet, die Befestigungshülse durch die vorbereitete Öffnung in den Stoßfänger zu schieben, da die Rastmittel dem Rand der Öffnung ausweichen können. Nachdem die Befestigungshülse bis zu einem geeigneten Anschlag durch die Stoßfängeröffnung hindurchgeschoben ist, werden die federnden Rastmittel nicht mehr durch die Kontur der Öffnung radial nach innen gehalten, sondern können sich radial nach außen bewegen, so daß sie die Innenwand des Stoßfängers hintergreifen, so daß die Befestigungshülse in axialer Richtung durch Anschlag und Rastmittel gehalten ist. Die Wirkung der an sich bekannten Spiralfeder wird somit durch federnde Rastnasen ersetzt.

Um mit einfachen Mitteln eine gute Federwirkung für die Rastnasen zu erreichen, wird in vorteilhafter Weiterbildung der Erfindung gemäß den Merkmalen nach Anspruch 2 jede der Rastnasen an das frei bewegliche Ende eines Federarms gesetzt, dessen anderes Ende einstückig mit der Befestigungshülse beispielsweise durch ein einstückiges Gußteil verbunden ist. Hierdurch können die Rastnasen beim Durchschieben der Betätigungshülse durch die Stoßfängeröffnung derart weit in den Innenraum der Hülse verschwenkt werden, daß sie nicht mehr aus dem Kreisumfang der Befestigungshülse vorstehen und so leicht durch die Öffnung geschoben werden können.

Sowohl die Fertigung des Stoßfängers selbst als auch der Öffnung für die Befestigungshülse sowie auch die Fertigung der Befestigungshülse selbst ist Toleranzen unterworfen. Um nun zu erreichen, daß unter keinen Umständen die in der Öffnung befestigte Hülse Spiel besitzt und möglicherweise Klappergeräusche von sich gibt, empfiehlt sich in Weiterbildung der Erfindung die Merkmalskombination nach Anspruch 3. Das Prinzip dieser Verbesserung besteht darin, die radial nach außen gerichtete Schwenkbewegung der Rastmittel gleichzeitig dafür auszunutzen, daß die Befestigungshülse in ihrer Längsrichtung mit ihrem Anschlag gegen den äußeren Rand der Öffnung gezogen wird. Dabei macht man von der Möglichkeit Gebrauch, daß beim Durchschieben der Befestigungshülse durch die Öffnung die Rastnasen an ihren Federarmen nach innen verschwenkt werden. Erst wenn die Befestigungshülse bis zum Anschlag in die Öffnung gesteckt ist, schwenken die Federarme mit den Nasen wieder nach außen. Haben die Federarme oder die Rastnasen eine entsprechend ausgestaltete keilförmige Kontur ihrer radial verlaufenden, der Innenwand des Stoßfängers zugewandten Stirnfläche, so werden die durch die Federkraft radial nach außen verschwenkten Keile wirksam und ziehen, sich an der Innenwand des Stoßfängers abstützend, die Befestigungshülse in ihrer Längsrichtung nach innen gegen den Anschlag. Dieser Anschlag kann beispielsweise die Form eines ringförmigen Bundes oder eines Bundes haben, der aus Ringabschnitten besteht. Ein wichtiges Prinzip der genannten Verbesserung besteht somit darin, daß der Teil der zweiten Haltemittel, welcher den geringsten Abstand zur Innenwand des Stoßfängers bzw. des Anschlages an der Befestigungshülse selbst besitzt, während des Durchschiebens der Hülse durch die Öffnung in den Innenraum der Hülse verschwenkt wird, so daß beim Herausschwenken der ersten Haltemittel diese infolge der Keilform den Bund der Hülse (Anschlag) gegen die Außenwand des Stoßfängers ziehen und diesen somit elastisch sichern.

Um die Sicherungswirkung der erfindungsgemäßen Befestigungshülse noch zu verbessern, empfiehlt sich in Weiterbildung der Erfindung die Merkmalskombination nach Anspruch 4. Hierdurch ergibt sich das Prinzip, daß die Federarme nicht nur aufgrund ihrer immanenten Federwirkung nach dem Passieren der Öffnung versuchen nach außen zu schwenken, sondern daß diese zusätzlich aufgrund ihrer im spannungsfreien Zustand in den Innenraum der Hülse ragenden Vorsprünge beim Einführen des Sensors in den Innenraum der Hülse nach außen gepreßt werden. Das Verkeilen findet somit nicht nur durch die Federwirkung der Federarme selbst, sondern auch durch die Spreizwirkung des in den Innenraum der Hülse geschobenen Sensorgehäuses statt. Als Folge davon wird auch der Sensor selbst durch die Reibungskraft der elastisch nach innen ragenden Vorsprünge der Federarme fest in der Hülse gehalten, so daß es nicht unbedingt zusätzlicher Haltemittel bedarf, die den Sensor in der Hülse halten. Es können aber auch zusätzlich Anschläge vorgesehen sein, welche die Bewegung des Sensors in Längsrichtung in der Hülse in Richtung Stoßfänger begrenzen. Um den Stoßfänger zusätzlich noch in beiden Richtungen zu sichern, kann an der Befestigungshülse ein Rasthaken vorgesehen sein, welcher einen entsprechenden Ansatz an dem Sensor ergreift.

Entsprechend der Merkmalskombination nach Anspruch 5 können die zweiten Haltemittel zum Verkeilen der Befestigungshülse aus besonderen Ansätzen gebildet sein, welche die beschriebenen Keile darstellen. Diese Keile können auf der Rastnase aufsitzen oder einen Teil von dieser bilden, wodurch sich eine einfache Ausgestaltung ergibt. Sie können aber auch von den Rastnasen getrennt an speziellen Orten der Befestigungshülse vorgesehen sein, so daß die ein Verlieren der Hülse verhindernden ersten Haltemittel und die elastisch verkeilenden zweiten Haltemittel an verschiedenen Stellen des Hülsenumfangs angeordnet sind.

Es kann die Gefahr bestehen, daß die zweiten Haltemittel nicht elastisch genug der Innenwand ausweichen können, wenn diese durch das Einschieben des Sensors radial kräftig nach außen gedrückt werden. Hierzu empfiehlt sich in Weiterbildung der Erfindung die aus Anspruch 7 sich ergebende Merkmalskombination. Es werden somit die zweiten Haltemittel selbst elastisch gegenüber den Rastnasen angeordnet, so daß die Keile einer in Längsrichtung der Hülse auf sie einwirkenden Kraft in bestimmtem Maße ausweichen können, so daß eine Zerstörung der Haltemittel verhindert wird. Den Befestigungspunkt dieser elastischen zweiten Mittel wird man dabei möglichst weit radial nach innen setzen, so daß die elastischen Keilenden leicht unter die Innenfläche der Stoßfänger gleiten können und bei einem Auswärtsverschwenken der Keile die in axialer Richtung gegen die Innenwand ausgeübte Kraft wächst.

Ein Ausführungsbeispiel der Erfindung wird nachfolgend anhand der Zeichnung erläutert. Dabei zeigt:
- Fig. 1: die Hülse in perspektivischer Darstellung von schräg hinten gesehen und
- Fig. 2: die Hülse nach Fig. 1 in perspektivischer Darstellung schräg von vorn gesehen.
- Fig. 3,4: das Prinzip einer Verbesserung der Erfindung.

Das Prinzip der Wirkungsweise einer derartigen Hülse wird im folgenden nur soweit erläutert, wie Abweichungen zu der in der DE-A-19528474 beschriebenen Befestigungsanordnung bestehen.

Die Befestigungshülse 1 ist im wesentlichen ein Hohlzylinder mit einem umlaufenden, vom Durchmesser der Hülse abstehenden ringförmigen Bund 2. Dieser Bund gelangt beim Durchschieben der Hülse durch die Öffnung in dem Stoßfänger am äußeren Rand der Öffnung zur Anlage und bildet somit in dieser Bewegungsrichtung der Hülse einen Anschlag. Die Befestigungshülse 1 besitzt an ihrem entgegengesetzten Ende zwei Rastlaschen 3, durch welche ein in die Hülse eingeschobener, in der Zeichnung nicht dargestellter Sensor mit entsprechenden Vorsprüngen eingerastet werden kann. Damit ist die Lage des Sensors gegenüber der Befestigungshülse 1 fixiert.

Zur Festlegung des Drehwinkels des Sensors gegenüber der Hülse 1 ist diese mit einer Zentriernut 4 versehen, in die ein entsprechender Vorsprung an dem Sensor eingeführt wird.

Für die Erfindung wichtig sind nun die Federarme 5 an dem dem Stoßfänger zugewandten Ende der Hülse 1. Diese einstükkig an die Hülse 1 angegossenen Federarme 5 sind an ihren freien Enden mit Rastnasen 6 versehen, deren Stirnflächen 7 die Innenwand des Stoßfängers hintergreifen, so daß die Hülse 1 gegenüber dem Rand der zugehörigen Öffnung in dem Stoßfänger in beiden Längsrichtungen gesichert ist. Die Stirnfläche kann dabei gegenüber der Innenfläche des nicht dargestellten Stoßfängers keilförmig geneigt sein, so daß sich die Stirnwand 7 beim Herausschwenken der Rastnase 6 verkeilt und somit die Befestigungshülse in axialer Richtung gegenüber dem Stoßfänger elastisch sichert. Die Elastizität der an der Innenwand angreifenden Stirnfläche läßt sich durch ein an dem Federarm angesetztes zweites Haltemittel verbessern, welches aus einem Federbügel 8 besteht. Der Federbügel hat im wesentlichen eine Winkelform, wobei der Bügelarm etwa in einer Ebene mit dem Federarm 5 liegt. Die Bügelstirnfläche 10 ist zu dem Bügelarm 9 nach außen schräg und keilförmig geneigt und gegenüber dem Federarm 5 elastisch verschwenkbar. Außerdem ragt in Richtung Innenfläche des Stoßfängers das äußerste Ende der Bügelstirnfläche über das äußere Ende der Stirnfläche 7 der Rastnase 6. Gegenüber den Stirnflächen 7 kann also die Bügelstirnfläche 10 in Längsrichtung der Hülse 1 um ein gewisses Maß ausweichen, welches die Bügelfeder vor Bruch schützt.

Für die erfindungsgemäße Befestigungshülse wichtig ist weiterhin, daß im entspannten Zustand der Hülse Vorsprünge 11,12 in den Innenraum der Hülse ragen und somit die innere Mantelfläche der Hülse schneiden. Wird nun der nicht dargestellte im wesentlichen zylinderförmige und mit den Innenabmessungen der Hülse korrespondierende Sensor in die Hülse geschoben, so werden diese Vorsprünge 11,12 nach außen gedrückt und somit auch die Stirnflächen 7,10 unter die Innenfläche des Stoßfängers gepreßt. Hierdurch wird die Befestigungshülse elastisch gegenüber dem Stoßfänger gesichert. Gleichzeitig sorgt der auf die Außenfläche des Sensors durch die Federarme ausgeübte Widerstand für einen elastischen und sicheren Halt des Sensors innerhalb der Hülse.

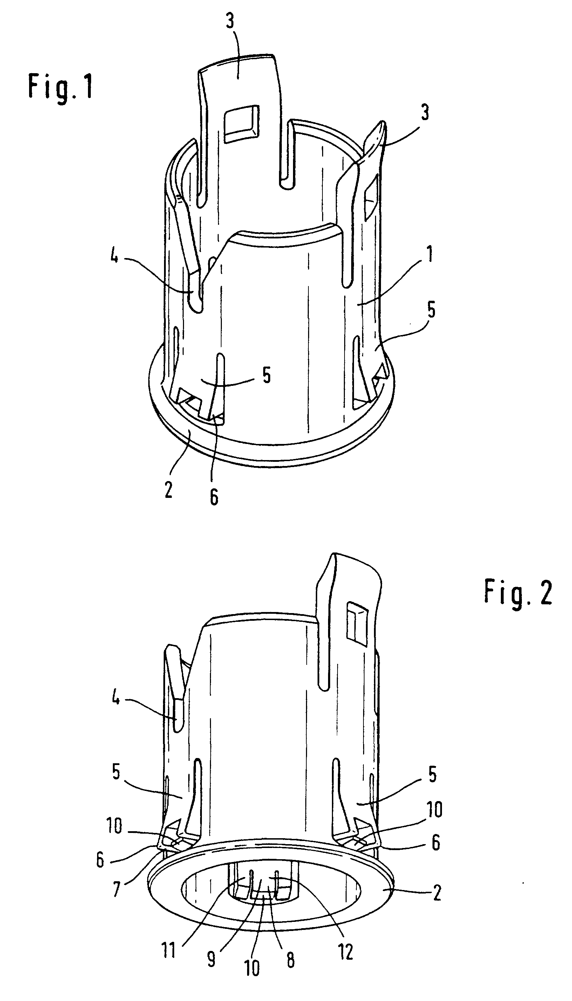

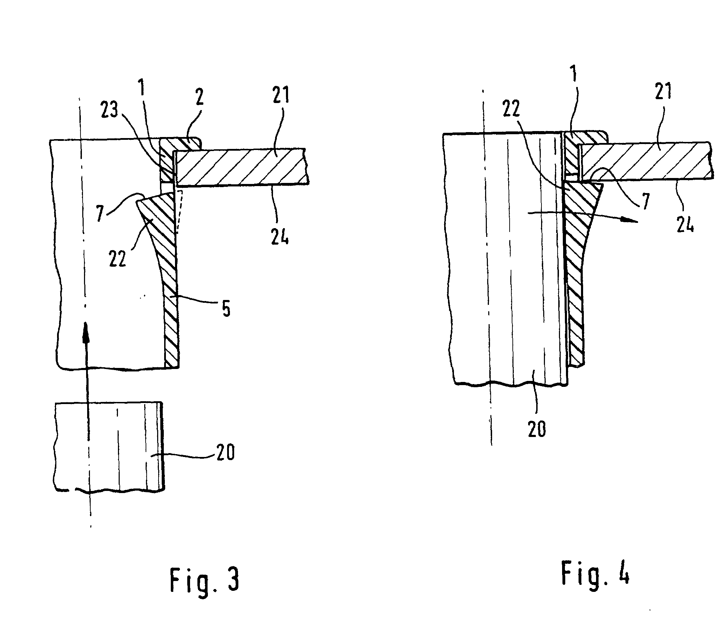

Fig. 3 und 4 zeigen das Prinzip der Keilwirkung beim Herausschwenken der Federarme 5. Fig. 3 zeigt ausschnittsweise den in einer vorzugsweise kreisrunden Öffnung 23 des Stoßdämpfers 21 eingefügte Befestigungshülse, die mit ihrem Bund 2 an der Außenfläche des Stoßfängers anliegt. Die in Fig. 3 bei noch nicht eingeschobenem Wandler 20 in ihrer Ruhestellung befindlichen Federarme 5 weisen mit ihren Vorsprüngen in den zylinderförmigen Innenraum der Befestigungshülse 1. Wird nun der Wandler 20 gemäß Fig. 4 in die Hülse 1 eingeschoben, so werden die Vorsprünge 22 nach außen gedräng, so daß sie die Innenwand 24 des Stoßfängers 21 hintergreifen und somit die Befestigungshülse 1 in axialer Richtung sichern. Dabei kann, wie weiter oben schon erläutert, im entspannten Zustand die Rastnase entsprechend Fig. 1 und 2 etwas radial nach außen über den Kreisumfang der Befestigungshülse 1 vorstehen. Die Erfindung läßt sich somit zusammenfassend wie folgt beschreiben.

Ein Ultraschallwandler soll im Fahrzeug (z.B. im Stoßfänger) befestigt werden. Die vorgeschlagene Lösung besteht aus einer einteiligen Halterung, die in eine zylindrische Bohrung eingesteckt wird. Sie überdeckt eventuelle Stanz- oder Schnittgrate der Bohrung, kompensiert Dickentoleranzen des Stoßfängers und zeichnet sich durch hohe Haltekräfte und einfache Montage aus.

Der Halter weist an der Vorderseite einen Bund auf, der sich an der Stoßfängeraußenkontur abstützt. Am Umfang befinden sich ein oder mehrere Rasthaken, die beim Einstecken des Halters leicht mit dem Stoßfänger verclipsen, beim anschließenden Eindrücken des Wandlers aber von innen aufgespreizt werden. Sie gleichen so durch ihre Klemmwirkung Toleranzen aus und verhindern eine Demontage ohne vorherigen Ausbau des Wandlers.
- Vorteile:: einfache Montage
selbtsichernde Befestigung ohne Schweißen, Kleben etc.
Toleranzausgleich
nur ein Bauteil
Abdeckung der Schnittkante

Aufspreizende Rasthaken mit Klemmwirkung; es kann am Stoßfänger auch eine zylindrische Hülse angespritzt sein, die den Halter umschließt und die am Umfang Fenster aufweist, in die die Rasthaken des Halters eingreifen. Dann kann der Bund am Halter entfallen und eine bündige Oberfläche erzielt werden.

## Patentansprüche

1. Befestigungshülse (1) zur Befestigung eines Gehäuses eines Sensors an einer Oberfläche eines Fahrzeugs, vorzugsweise eines Ultraschallwandlers an der Außenfläche eines Stoßfänges (21), wobei die Befestigungshülse (1) von außen durch eine Öffnung (23) in den Stoßfänger (21) ragt und durch einen Anschlag (2) am Passieren der Stoßfängeröffnung (23) gehindert ist, wobei wenigstens ein erstes federndes Haltemittel (5, 6, 7) vorgesehen ist, das die Innenwand (24) des Stoßfängers (21) mit ihrem einen Endbereich hintergreifet und ein Herausgleiten der Befestigungshülse (1) entgegen der Einbaurichtung verhindert und daß das wenigstens erste federnde Haltemittel (5, 6, 7) sich in seinem anderen Endbereich am in den Innenraum der Befestigungshülse (1) eingeschobenen Sensorgehäuse abstützt, **dadurch gekennzeichnet, daß** das wenigstens eine bei noch nicht eingeschobenem Sensorgehäuse in ihrer Ruhestellung befindliche federnde Haltemittel (5, 6, 7) mit seinen anderen Endbereich in den Innenraum der Befestigungshülse (1) ragt.

2. Befestigungshülse nach Anspruch 1, **dadurch gekennzeichnet, daß** die Rastnasen (6) an dem einen Ende von radial ausschwenkbaren Federarmen (5) sitzen, deren anderes Ende einstückig mit der Befestigungshülse (1) verbunden ist.

3. Federhülse nach Anspruch 1 oder 2, **dadurch gekennzeichnet, daß** die Rastnasen (6) und/oder die Federarme (5) mit zweiten Haltemitteln (7) versehen sind, die bei einer radial nach außen gerichteten Verschwenkung den lichten Abstand zwischen der Innenfläche des Stoßfängers und der dieser Innenfläche im wesentlichen zugewandten Stirnfläche (7) von Rastnase (8) und/oder Federarme (5) verkleinern.

4. Befestigungshülse nach einem der Ansprüche 1 bis 3, **dadurch gekennzeichnet, daß** die Rastnasen (8) und/oder die Federarme (5) derart mit Vorsprüngen (11,12) in den Innenraum der Befestigungshülse ragen, daß sie beim Einführen des Sensorgehäuses radial nach außen verschwenkt werden.

5. Befestigungshülse nach Anspruch 3 oder 4, **dadurch gekennzeichnet, daß** die zweiten Haltemittel aus einem im wesentlichen zum Anschlag hin weisenden Ansatz (8,9,10) gebildet sind, welcher bei einer radial nach außen gerichteten Bewegung des zugehörigen Federarms (5,9) auf die Innenfläche des Stoßfängers einwirkt.

6. Befestigungsgehäuse nach Anspruch 5, **dadurch gekennzeichnet, daß** die Stirnfläche des Ansatzes (6,10) in radialer Richtung nach außen keilförmig gegenüber der Innenwand des Stoßfängers geneigt ist.

7. Befestigungshülse nach einem der Ansprüche 3 bis 6, **dadurch gekennzeichnet, daß** die zweiten Haltemittel vorzugsweise von dem Endbereich des Federarms (5) und/oder der Rastnase (8) abgehende, radial nach außen verschwenkbare federnde Bügel (9,10) sind.

8. Befestigungshülse nach Anspruch 7, **dadurch gekennzeichnet, daß** der Federbügel am Boden einer Nut der Rastnase (6) einstückig mit dieser verbunden ist.

## Claims

1. Fastening case (1) for fastening a housing of a sensor to the surface of a vehicle, preferably of an ultrasound transducer to the outer surface of a bumper (21), wherein the fastening case (1) extends from the outside through an opening (23) into the bumper (21) and by means of a stop (2) is prevented from going past the bumper opening (23), wherein at least a first spring-loaded retaining means (5, 6, 7) is provided which grip behind the inner wall (24) of the bumper (21) with its end area and prevents a sliding out of the fastening case (1) opposite to the direction of mounting and wherein the first spring-loaded retaining means (5, 6, 7) supports itself in its other end area at the sensor housing interjected into the interior of the fastening case (1), **characterized in that** the at least first retaining means (5, 6, 7) is protruding into the interior of the fastening case (1), when it is in its normal position and the sensor housing is not yet interjected

2. Fastening case according to claim 1, **characterized in that** the latches (6) are located at the one end of radially displaceable spring arms (5) whose other end is connected in one piece with the fastening case (1).

3. Spring-loaded casing according to claim 1 or 2, **characterized in that** the latches (6) and/or the spring arms (5) are provided with secondary retaining means (7) which, during a radially outward displacement, reduce the distance between the inner surface of the bumper and the front faces (7) of the latches (8) and/or the spring arms (5), which essentially face this inner surface.

4. Fastening case according to one of claims 1 to 3, **characterized in that** the latches (8) and/or the spring arms (5) extend with projections (11, 12) into the interior of the fastening case in such a way, that they are radially displaced outwardly during the introduction of the sensor housing.

5. Fastening case according to claim 3 or 4, **characterized in that** second retaining means are formed by a projection (8, 9, 10) essentially pointing toward the stop which, during a radially outwardly directed movement of the accompanying spring arm (5, 9), acts upon the inner surface of the bumper.

6. Fastening case according to claim 5, **characterized in that** the front face of the projection (6, 10) in radial direction toward the outside is inclined in a wedge-like manner with respect to the inner wall of the bumper.

7. Fastening case according to one of claims 3 to 6, **characterized in that** second retaining means are spring-loaded clips (9, 10), preferably extending from the end area of the spring arm (5) and/or of the latch (8), which can be radially displaced in outward direction.

8. Fastening case according to claim 7, **characterized in that** the spring clip is connected at the base of a groove of the latch (6), forming one piece with these.

## Revendications

1. Douille de fixation (1) pour la fixation d'un boîtier d'un capteur sur une surface d'un véhicule, de préférence d'un transducteur ultrasonique sur la surface extérieure d'un pare-chocs (21), la douille de fixation (1) dépassant par l'extérieur à travers une ouverture (23) dans le pare-chocs (21) et étant empêchée par une buée (2) de passer dans l'ouverture du pare-chocs (23), dans laquelle il est prévu au moins un premier moyen de retenue (5, 6, 7) élastique qui saisit par l'arrière la paroi interne (24) du pare-chocs (21) avec une zone d'extrémité et empêche une sortie par glissement de la douille de fixation (1) dans le sens contraire au sens de montage, au moins le premier moyen de retenue (5, 6, 7) élastique s'appuyant dans son autre zone d'extrémité sur le boîtier de capteur introduit dans l'espace intérieur de la douille de fixation (1), **caractérisée en ce qu'**au moins un moyen de retenue (5, 6, 7) élastique se trouvant dans sa position de repos avec le boîtier de capteur non encore introduit dépasse avec son autre zone d'extrémité dans l'espace intérieur de la douille de fixation (1).

2. Douille de fixation selon la revendication 1, **caractérisée en ce que** les ergots d'arrêt (6) sont disposés sur une des extrémités de bras de ressort (5) pouvant basculer, dont l'autre extrémité est reliée d'un seul tenant à la douille de fixation (1).

3. Douille à ressort selon la revendication 1 ou 2, **caractérisée en ce que** les ergots d'arrêt (6) et/ou les bras de ressort (5) sont pourvus de deux moyens de retenue (7), qui, lors d'un basculement orienté radialement vers l'extérieur, réduit l'écartement entre la surface interne du pare-chocs et la surface frontale (7) de l'ergot d'arrêt (8) et/ou des bras de ressort (5) qui est sensiblement tournée vers cette surface interne.

4. Douille de fixation selon l'une quelconque des revendications 1 à 3, **caractérisée en ce que** les ergots d'arrêt (8) et/ou les bras de ressort (5) dépassent avec des saillies (11, 12) dans l'espace intérieur de la douille de fixation de telle sorte qu'ils sont basculés radialement vers l'extérieur lors de l'introduction du boîtier du capteur.

5. Douille de fixation selon la revendication 3 ou 4, **caractérisée en ce que** les seconds moyens de retenue sont formés par une embase (8, 9, 10) dirigée sensiblement en direction de la butée, qui agit sur la surface interne du pare-chocs dans le cas d'un mouvement, dirigé radialement vers l'extérieur, du bras de ressort (5, 9) correspondant.

6. Boîtier de fixation selon la revendication 5, **caractérisé en ce que** la surface frontale de l'embase (6, 10) est inclinée dans le sens radial vers l'extérieur à la façon d'une clavette par rapport à la paroi interne du pare-chocs.

7. Douille de fixation selon l'une quelconque des revendications 3 à 6, **caractérisée en ce que** les seconds moyens de retenue sont des étriers (9, 10) élastiques partant de préférence de la zone d'extrémité du bras de ressort (5) et/ou de l'ergot d'arrêt (8) et pouvant basculer radialement vers l'extérieur.

8. Douille de fixation selon la revendication 7, **caractérisée en ce que** l'étrier de ressort est relié sur le fond d'une rainure de l'ergot d'arrêt (6) d'un seul tenant à celui-ci.
